(19) Europäisches Patentamt
European Patent Office
Office européen des brevets

(11) **EP 2 785 058 A1**

(12) **EUROPEAN PATENT APPLICATION**
published in accordance with Art. 153(4) EPC

(43) Date of publication:
**01.10.2014 Bulletin 2014/40**

(51) Int Cl.:
***H04N 7/52*** *(2011.01)*

(21) Application number: **11867149.4**

(22) Date of filing: **23.11.2011**

(86) International application number:
**PCT/CN2011/082747**

(87) International publication number:
**WO 2012/167568 (13.12.2012 Gazette 2012/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd Shenzhen, Guangdong 518129 (CN)**

(72) Inventor: **WANG, Wei Shenzhen Guangdong 518129 (CN)**

(74) Representative: **Barth, Stephan Manuel Isarpatent Friedrichstraße 31 80801 München (DE)**

(54) **VIDEO ADVERTISEMENT BROADCASTING METHOD, DEVICE AND SYSTEM**

(57) Embodiments of the present invention provide a method, a device, and a system for playing a video advertisement. The method includes: receiving at least one of image feature data, a subtitle text, and an audio text of a video file sent by a client, where the image feature data, subtitle text, and audio text of the video file are obtained by the client by analysis respectively according to a video image, a video subtitle, and audio content of the video file being played; obtaining a feature fusion result vector of the video file according to the at least one of the image feature data, subtitle text, and audio text of the video file; performing similarity matching calculation on feature fusion result vectors of advertisement files to be placed and the feature fusion result vector of the video file and determining one or more advertisement files of maximum similarity as a matching advertisement file; and sending the matching advertisement file to the client. With the embodiments of the present invention, an advertisement played on a client is more adaptable to a scene being played on the client.

FIG. 2

**Description**

**TECHNICAL FIELD**

The present invention relates to the field of information technologies, and in particular, to a method, a device, and a system for playing a video advertisement.

**BACKGROUND**

Web advertisements have been developing rapidly in recent years and have become an importance means of propaganda for businesses. However, Web surfers nowadays have access to more Web resources and they are more sensitive and alert to advertisement information. Therefore, it is necessary to make the placed advertisement content more adaptable to a target video file so that the advertisement content is fit for a scene played in a current video and that a better advertisement placement effect can be achieved.

One method is to determine video content manually and tag the videos, and when a video is played, search, according to the tags, for an advertisement that matches the video and play the advertisement. This method, however, consumes a large quantity of manpower. The playing progress and content of a video are unknown, and therefore it is impossible to place an advertisement fit for the scene being played.

Another method is to define an advertisement index in advance on a server for video files to be played on a client and send the advertisement index to the client. When a video file is played on the client, the client selects, according to the playing sequence preset in the advertisement index, an advertisement to be played and requests the server to play the advertisement. With this method, however, once the advertisement index file is determined, it is hard to modify the advertisement index file. Moreover, because the server is unable to learn the playing progress and content of a video, the server cannot select an advertisement fit for

**SUMMARY**

Embodiments of the present invention provide a method, a device, and a system for playing a video advertisement, so that a client places an advertisement that is fit for a scene being played.

In one aspect, an embodiment of the present invention provides a video advertisement playing method, including:

receiving at least one of image feature data, a subtitle text, and an audio text of a video file sent by a client, where the image feature data, subtitle text, and audio text of the video file are obtained by the client by analysis respectively according to a video image, a video subtitle, and audio content of the video file being played;

obtaining a feature fusion result vector of the video file according to the at least one of the image feature data, subtitle text, and audio text of the video file;

performing similarity matching calculation on feature fusion result vectors of advertisement files to be placed and the feature fusion result vector of the video file and determining one or more advertisement files with maximum similarity as a matching advertisement file; and

sending the matching advertisement file to the client.

An embodiment of the present invention also provides another video advertisement playing method, including:

making analysis according to a video image and/or a video subtitle and/or audio content of a video file being played to obtain at least one of image feature data of the video image, a subtitle text of the video subtitle, and an audio text of the audio content;

sending the at least one of the image feature data, subtitle text, and audio text of the video file to a server, so that the server determines a matching advertisement file according to the at least one of the image feature data, subtitle text, and audio text of the video file; and

playing the matching advertisement file sent by the server.

In another aspect, an embodiment of the present invention also provides a server, including:

a receiver, configured to receive at least one of image feature data, a subtitle text, and an audio text of a video file sent by a client, where the image feature data, subtitle text, and audio text of the video file are obtained by the client by analysis respectively according to a video image, a video subtitle, and audio content of the video file being played;

a processor, configured to obtain a feature fusion result vector of the video file according to the at least one of the image feature data, subtitle text, and audio text of the video file, perform similarity matching calculation on feature fusion result vectors of advertisement files to be placed and the feature fusion result vector of the video file, and determine one or more advertisement files of maximum similarity as a matching advertisement file; and
a transmitter, configured to send the matching advertisement file to the client.

An embodiment of the present invention also provides a client, including:

a processor, configured to make analysis according to a video image and/or a video subtitle and/or audio content of a video file being played to obtain at least one of image feature data of the video image, a subtitle text of the video subtitle, and an audio text of the audio content;
a transmitter, configured to send the at least one of the image feature data, subtitle text, and audio text of the video file to a server, so that the server determines a matching advertisement file according to the at least one of the image feature data, subtitle text, and audio text of the video file; and
a player, configured to play the matching advertisement file sent by the server.

In still another aspect, an embodiment of the present invention also provides a video advertisement playing system, including a client and a server, where:

the client is configured to: make analysis according to a video image and/or a video subtitle and/or audio content of a video file being played to obtain at least one of image feature data of the video image, a subtitle text of the video subtitle, and an audio text of the audio content; send the at least one of the image feature data, subtitle text, and audio text of the video file to the server, so that the server determines a matching advertisement file according to the at least one of the image feature data, subtitle text, and audio text of the video file; and play the matching advertisement file sent by the server; and
the server is configured to: receive the at least one of the image feature data, subtitle text, and audio text of the video file sent by the client, where the image feature data, subtitle text, and audio text of the video file are obtained by the client by analysis respectively according to the video image, video subtitle, and audio content of the video file being played; obtain a feature fusion result vector of the video file according to the at least one of the image feature data, subtitle text, and audio text of the video file; perform similarity matching calculation on feature fusion result vectors of advertisement files to be placed and the feature fusion result vector of the video file and determine one or more advertisement files of maximum similarity as a matching advertisement file; and send the matching advertisement file to the client.

By using the method, device, and system for playing a video advertisement according to the embodiments of the present invention, the client makes analysis according to a video image being played to obtain at least one of image feature data, a subtitle text, and an audio text and send to the server; the server obtains a feature fusion result vector of a video file according to the feature data provided by the client, performs similarity matching calculation with feature fusion result vectors of advertisement files to be placed to determine a matching advertisement file, and then sends the matching advertisement to the client for playing, so that the advertisement played on the client is more adaptable to the scene being played on the client.

BRIEF DESCRIPTION OF DRAWINGS

To illustrate the technical solutions in the embodiments of the present invention or conventional solution more clearly, the following briefly introduces the accompanying drawings required for describing the embodiments or conventional solution. Apparently, the accompanying drawings in the following description show merely some embodiments of the present invention, and persons of ordinary skill in the art may still derive other drawings from these accompanying drawings without creative efforts.

FIG. 1 is a flowchart of a video advertisement playing method according to an embodiment of the present invention;
FIG. 2 is a flowchart of a video advertisement playing method according to another embodiment of the present invention;
FIG. 3 is a flowchart of a video advertisement playing method according to still another embodiment of the present invention;
FIG. 4 is a flowchart of a video advertisement playing method according to still another embodiment of the present invention;
FIG. 5 is a schematic structural diagram of a server according to an embodiment of the present invention;
FIG. 6 is a schematic structural diagram of a server according to another embodiment of the present invention;
FIG. 7 is a schematic structural diagram of a client according to an embodiment of the present invention; and

FIG. 8 is a schematic structural diagram of a video advertisement playing system according to an embodiment of the present invention.

## DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

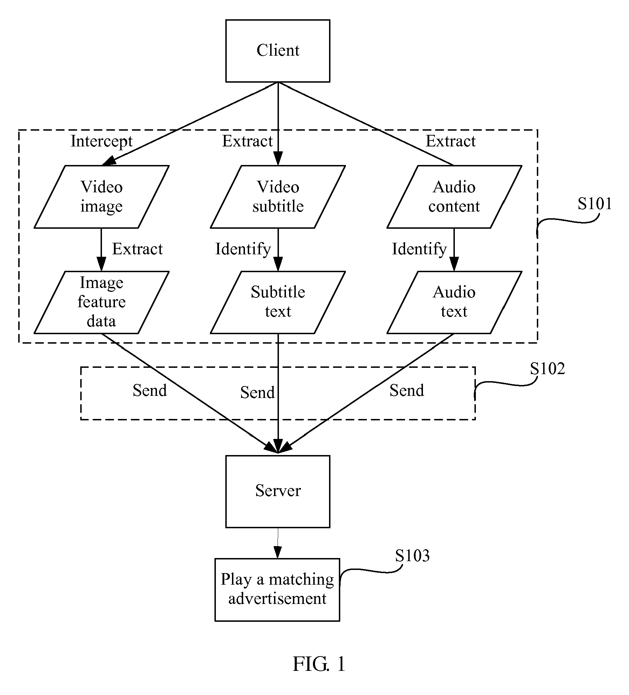

FIG. 1 is a flowchart of a video advertisement playing method according to an embodiment of the present invention. As shown in FIG. 1, the method includes the following:

S101. Make analysis according to a video image and/or a video subtitle and/or audio content of a video file being played to obtain at least one of image feature data of the video image, a subtitle text of the video subtitle, and an audio text of the audio content.

S102. Send the at least one of the image feature data, subtitle text, and audio text of the video file to a server to cause the server to determine a matching advertisement file according to the at least one of the image feature data, subtitle text, and audio text of the video file.

S103. Play the matching advertisement file sent by the server.

The executor of the above steps is a client, which may specifically be a video player on a terminal device such as a personal computer and a mobile phone.

According to the video content of the video file being played, the client may obtain the image being played in a given position and extracts the image feature data of the video image being played. The client may use various conventional image feature data extracting algorithms, such as a scale-invariant feature transform (Scale-invariant feature transform, SIFT) algorithm. The image feature data extracted by the client may include:

the color feature of the video image: this is usually represented by color accumulation histogram data, which is used to describe the statistical distribution feature of image colors and is transition-, scale-, and rotation-invariant; the texture feature of the video image: this is usually represented by gray-level co-occurrence matrix data, where the statistical values of gray-level co-occurrence matrix data may be used as metrics of the texture feature, the gray-level co-occurrence matrix describes the joint probability distribution for the co-occurrence of two gray-level pixels with a distance of ($\Delta x$, $\Delta y$) in the image, and if the gray level of an image is L, the co-occurrence matrix is an LxL matrix; and shape feature of the video image: this may be described by an outline feature of the image or an area feature of the image. The outline feature of an image concerns the outer border of an object while the area feature of an image is specific to the total area of a shape, and shape parameters of the image are obtained by describing a border feature.

The client may also use a conventional speech recognition technology to convert lexical content in the speech of a video file into computer readable inputs such as keys, binary codes, or character sequences.

If a subtitle is provided in a video being played on the client, the client may further extract the subtitle according to the video file being played to obtain a subtitle text. Therefore, the feature data sent by the client to the server also includes the subtitle text.

The client may use various conventional video text extracting methods to extract the subtitle text. A subtitle text extracting process may include the following: The client may slice a video segment into video images and process the video images; the client determines whether a video image includes text information, determines a position of the text information in the video image, and cuts off a text area; the client may find multiple successive frames that include the same text by using a time redundancy feature of the text information and enhance the text area by using a method such as multi-frame fusion; then, the client performs grayscale transform and binary transform on the extracted text area and recognizes the obtained text image with black characters on a white background or white characters on a black background to obtain the subtitle text. Recognizing the text image may be implemented by using a conventional technology such as optical character recognition (Optical Character Recognition, OCR).

It should be noted that the foregoing is only one implementation for the client to make analysis to obtain the image feature data of the video image, the subtitle text of the video subtitle, and the audio text of the audio content. In fact, the client may use other approaches to analyze the video image being played to obtain at least one of the image feature data of the video image, the subtitle text of the video subtitle, and the audio text of the audio content.

The client sends the at least one of the image feature data, audio text, and subtitle text obtained by analysis to the server. Accordingly, the server may match the received at least one of the obtained image feature data, audio text, and subtitle text with locally stored advertisement files to determine an advertisement file that matches the video image being played on the client. After determining the matching advertisement file, the server may send the matching advertisement file or advertisement link to the client for the client to play.

By using the video advertisement playing method provided in the embodiment, the client makes analysis according to a video image being played to obtain at least one of image feature data, a subtitle text, and an audio text and sends the at least one of the image feature data, the subtitle text, and the audio text to the server; the server obtains a feature fusion result vector of the video file according to the feature data provided by the client, performs similarity matching with feature fusion result vectors of advertisement files to be placed to determine a matching advertisement file, and then sends the matching advertisement to the client for playing, so that the advertisement played on the client is more adaptable to the scene being played on the client.

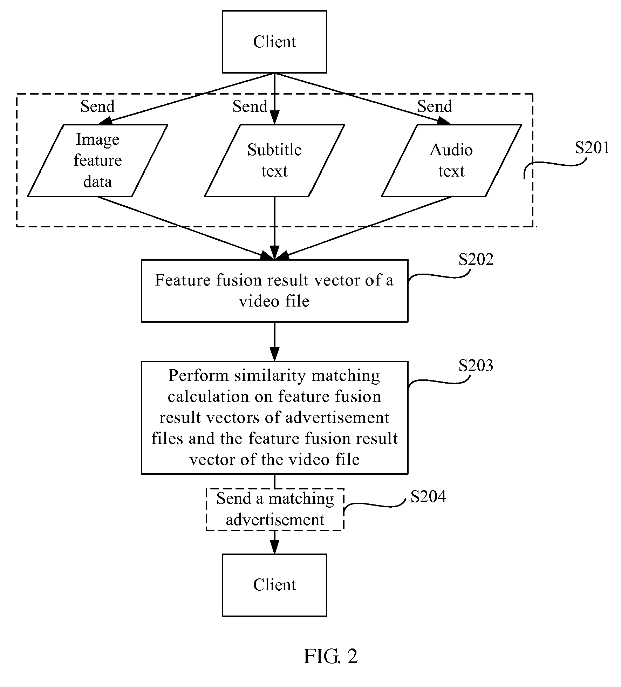

FIG. 2 is a flowchart of a video advertisement playing method according to another embodiment of the present invention. As shown in FIG. 2, the method includes the following:

S201. Receive at least one of image feature data, a subtitle text, and an audio text of a video file sent by a client, where the image feature data, subtitle text, and audio text of the video file are obtained by the client by analysis respectively according to a video image, a video subtitle, and audio content of the video file being played.

S202. Obtain a feature fusion result vector of the video file according to the at least one of the image feature data, subtitle text, and audio text of the video file.

S203. Perform similarity matching on feature fusion result vectors of advertisement files to be placed and the feature fusion result vector of the video file and determine one or more advertisement files of maximum similarity as a matching advertisement file.

S204. Send the matching advertisement file to the client.

The executor of the above steps is a server.

According to the video content being played, the client may obtain the image being played in a given position and extract the image feature data of the video image being played. Specifically, the image feature data may include: color accumulation histogram data, which is used to indicate an image color feature of the video image, gray-level co-occurrence matrix data, which is used to indicate an image texture feature of the video image, and gray-level gradient direction matrix data, which is used to indicate an image shape feature of the video image. The client may also use a conventional speech recognition technology to convert lexical content in human speech into computer readable inputs such as keys, binary codes, or character sequences.

In another implementation scenario, if there is a subtitle in the video being played on the client, the client may extract the subtitle according to the video file being played to obtain a subtitle text. In this scenario, the video file feature data sent by the client to the server further includes the subtitle text of the video file.

The server may collect some pictures or video images in advance. The pictures may be some important images in the video or video images where an advertisement is designated for insertion. The server may extract image features of these pictures or video images to obtain image feature data. The image feature data may include color accumulation histogram data, which is used to indicate image color features of the video images, gray-level co-occurrence matrix data, which is used to indicate image texture features of the video images, and gray-level gradient direction matrix data, which is used to indicate image shape features of the video images. The server may annotate the selected pictures. The server may annotate the content or types of the pictures. The server may set up a relationship between the image feature data and annotations and use a machine learning algorithm, such as a support vector machine (Support Vector Machine, SVM) algorithm, to train the selected feature data and obtain an image feature data classification model. The essence of a machine learning algorithm is that a machine can obtain some "experience" by learning the image feature data and annotations of the pictures for training, and thereby is capable of classifying new data. The "experience" acquired by the machine by learning is the image feature data classification model.

Likewise, the server may select some subtitle files and audio files in advance and use a machine learning algorithm such as an SVM algorithm to train the feature data and annotations of the subtitle files and audio files, and thereby obtain a subtitle text classification model and an audio text classification model.

After the server receives the at least one of the image feature data, subtitle text, and audio text sent by the client, on the one hand, the server may input the image feature data into the image feature data classification model for classification to obtain an image feature data result vector which includes multiple dimensions each representing a class such as a sports class, a finance and economics class, and an entertainment class. Each dimension of the vector represents a probability that the input image feature data belongs to a corresponding class. When the value of a dimension corresponding to a class is greater, the probability that the input image feature data belongs to the class is higher. That is, a process in which the server inputs the input image feature data into the image feature data classification model and outputs an image feature data result vector is in fact a process of classifying the image feature data.

Likewise, the server may input the subtitle text into the subtitle text classification model to obtain a subtitle text classification result vector; the server may also input the audio text into the audio text classification module to obtain an audio text classification result vector.

After obtaining at least one of the image feature data result vector, subtitle text classification result vector, and audio text classification result vector, the server may perform weighted fusion calculation on the at least one of the image feature data classification result vector, subtitle text classification result vector, and audio text classification result vector. That is, the server performs weighted fusion on an image feature data class indicated by the image feature data classification result vector, and/or a subtitle text class indicated by the subtitle text classification result vector, and/or an audio text class indicated by the audio text classification result vector, to obtain a feature fusion result vector of the video file, where the feature fusion result vector indicates the class of the video content being played on the client. The server may perform the weighted fusion by using various weighted fusion algorithms provided in the prior art.

On the other hand, the server may first obtain the image feature data and/or audio texts corresponding to advertisement files to be placed, and for subtitled advertisement files, the server may further obtain the subtitle texts of the advertisement files to be placed; then, the server inputs the image feature data and/or audio text and/or subtitle text corresponding to each advertisement file into the image feature data classification model, audio text classification model, and subtitle text classification model to obtain an image feature data result vector, an audio text classification result vector, and a subtitle text classification result vector corresponding to each advertisement file; and then, the server performs fusion calculation on the image feature data result vector, and/or audio text classification result vector, and/or subtitle text classification result vector to obtain a feature fusion result vector of the advertisement file.

After obtaining the feature fusion result vector corresponding to the video file being played on the client and a feature fusion result vector corresponding to each advertisement file to be placed, the server may further perform similarity matching calculation on the feature fusion result vector corresponding to the video file and the feature fusion result vectors corresponding to the advertisement files to be placed, and determine, according to a similarity level, one or more advertisement files that best match the video content being played on the client. The server may perform the similarity matching by using various similarity matching algorithms provided in the prior art.

After determining the matching advertisement file, the server may send the matching advertisement file or advertisement link to the client for the client to play.

By using the video advertisement playing method provided in the embodiment, the client makes analysis according to a video image being played to obtain at least one of image feature data, a subtitle text, and an audio text and send to the server; the server obtains a feature fusion result vector of the video file according to the feature data provided by the client, performs similarity matching with feature fusion result vectors of advertisement files to be placed to determine a matching advertisement file, and then sends the matching advertisement to the client for playing, so that the advertisement played on the client is more adaptable to the scene being played on the client.

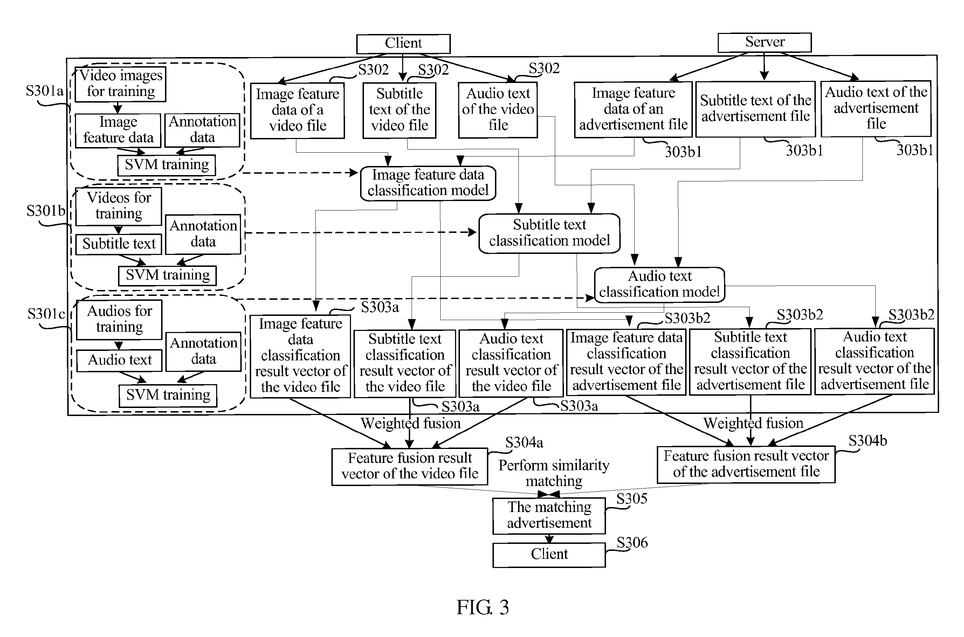

FIG. 3 is a flowchart of a video advertisement playing method according to still another embodiment of the present invention. As shown in FIG. 3, the embodiment is a specific embodiment where video file feature data provided by a client to a server includes at least one of image feature data, a subtitle text, and an audio text, and the server determines a matching advertisement according to the at least one of the image feature data, subtitle text, and audio text. The method includes the following:

S301a. The server extracts image features of collected video images for training, to obtain image feature data of the video images for training, performs text annotating on the video images for training to obtain annotation data of the video images for training, and performs support vector machine SVM training on the image feature data and annotation data of the video images for training to obtain an image feature data classification model.

The server may collect a number of pictures, which may be some important images in a video or video images where advertisements are designated for insertion. These pictures are named video images for training herein. The server may extract image features of the video images for training, to obtain image feature data of the video images for training. The image feature data may include: color accumulation histogram data, which is used to indicate image color features of the video images, gray-level co-occurrence matrix data, which is used to indicate image texture features of the video images, and gray-level gradient direction matrix data, which is used to indicate image shape features of the video images.

The server may further perform text annotating on the video images for training, which is to classify the video images for training according to their classes such as a sports class, a finance and economics class, and an entertainment class, thereby obtaining the annotation data of the video images for training.

The server may use the image feature data and annotation data of the video images for training as inputs of an SVM classification algorithm and perform support vector machine SVM training on the image feature data and annotation data to obtain an image feature data classification model. This means that a machine may learn the image feature data and annotation data of the pictures for training to acquire some "experience" and thereby is capable of classifying new data. The "experience" acquired by the machine by learning is the image feature data classification model.

S301b. The server extracts subtitles of collected videos for training to obtain subtitle texts of the videos for training, performs text annotating on the videos for training to obtain annotation data of the videos for training, and performs SVM training on the subtitle texts and annotation data of the videos for training to obtain a subtitle text classification model.

Similarly to S301a, the server may collect subtitled videos for training and extract the subtitles of the videos for training to obtain the subtitle texts of the videos for training. In addition, the server may perform text annotating on the videos for training to obtain the annotation data of the videos for training and then use the subtitle texts and annotation data of the videos for training as inputs of the SVM classification algorithm, and perform SVM training on the subtitle texts and annotation data of the videos for training to obtain a subtitle text classification model.

S301c. The server extracts audios of collected audio content for training to obtain audio texts of the audios for training, performs text annotating on the audios for training to obtain annotation data of the audios for training, and performs SVM training on the video texts and annotation data of the audios for training to obtain an audio text classification model.

Similarly to S301a, the server may also collect audio-inclusive videos for training and extract the audios of the audio content for training to obtain the audio texts of the audio content for training. The server also needs to perform text annotating on the audios of the video images for training to obtain text annotations of the audios of the video images for training, then use the audio texts and annotation data of the audio content for training as inputs of the SVM classification algorithm, and perform SVM training on the audio texts and annotation data of the audio content for training to obtain the audio text classification model.

Steps S301a to S301c are a process in which the server obtains the image feature data classification model, subtitle text classification model, and audio text classification model through SVM training. The above steps may be performed in random order.

S302. The server receives image feature data, a subtitle text, and an audio text of a video file sent by the client.

S303a. The server inputs the image feature data of the video file into a preset image feature data classification model for classification to obtain an image feature data classification result vector of the video file; and/or the server inputs the subtitle text of the video file into a preset subtitle text classification model for classification to obtain a subtitle text classification result vector of the video file; and/or the server inputs the audio text of the video file into a preset audio text classification model for classification to obtain an audio text classification result vector of the video file.

The image feature data classification model, subtitle text classification model, and audio text classification model have the same classification dimensions.

Because the image feature data classification model, subtitle text classification model, and audio text classification model pre-established by the server are empirical models used to classify the image feature data, subtitle text, and audio text, the image feature data classification result vector, subtitle text classification result vector, and audio text classification result vector output from the image feature data classification model, subtitle text classification model, and audio text classification model reflect the image feature data class, subtitle text class, and audio text class of the video file, respectively.

Because the image feature data classification model, subtitle text classification model, and audio text classification model have the same classes and the same dimensions, the default values of the image feature data classification result vector, subtitle text classification result vector, and audio text classification result vector of the video file may all

be $(\frac{1}{n}, \frac{1}{n}, ... \frac{1}{n})$, which includes n pieces of 1/n, where n is the number of classification dimensions.

It should be noted that the client may send one or more of the image feature data, subtitle text, and audio text of the video file to the server. For example, if a video has no audio, the client may send image feature data and a subtitle text to the server. In this case, the server may use an audio text classification result vector as a default value. Other cases are not listed herein.

Corresponding to obtaining the image feature data classification result vector, subtitle text classification result vector, and audio text classification result vector of the video file, the server may obtain image feature data, a subtitle text, and an audio text of each advertisement file according to a video image, a video subtitle, and audio content of each advertisement file to be placed, and input the image feature data, subtitle text, and audio text of each advertisement file into the image feature data classification model, subtitle text classification model, and audio text classification model to obtain an image feature data classification result vector, a subtitle text classification result vector, or an audio text classification result vector of each advertisement, respectively. This means that the server also needs to execute S303b1 and S303b2 so as to proceed with the subsequent matching operation.

S303b1. The server obtains at least one of image feature data, a subtitle text, and an audio text of each advertisement file according to a video image and/or a video subtitle and/or audio content of each advertisement file to be placed.

For details about how the server obtains the image feature data, subtitle text, and audio text of each advertisement file, reference may be made to the specific process in which the client obtains the image feature data, subtitle text, and audio text of a video file in the foregoing embodiment. Details are not described herein.

S303b2. The server inputs the image feature data of each advertisement file into the image feature data classification model for classification to obtain an image feature data classification result vector of each advertisement file; and/or the server inputs the subtitle text of each advertisement file into the subtitle text classification model for classification to obtain a subtitle text classification result vector of each advertisement file; and/or the server inputs the audio text of each advertisement file into the audio text classification model for classification to obtain an audio text classification result vector of each advertisement file.

The image feature data classification result vector of an advertisement file, the subtitle text classification result vector of an advertisement file, and the audio text classification result vector of an advertisement file have the same classification dimensions.

It should be noted that S303b1 and S303b2 may be performed before the server receives the at least one of the image feature data, subtitle text, and audio text of the video file sent by the client, or performed after the server receives the at least one of the image feature data, subtitle text, and audio text.

S304a. The server performs weighted fusion calculation on at least one of the image feature data classification result vector, subtitle text classification result vector, and audio text classification result vector of the video file to obtain a feature fusion result vector of the video file.

The embodiment provides a method for weighted fusion calculation. Assuming there are n classification dimensions, the image feature data classification result vector of a video file obtained from the image feature data classification model of video files is:

$$\vec{U} = (u_1, u_2, \ldots u_n);$$

where, $\vec{U}$ represents the image feature data classification result vector, $0 < u_i < 1$, i=1, 2, ..., n, and $u_i$ is a score of the image feature data classification result vector in dimension i obtained by inputting the image feature data into the image feature data classification model.

The subtitle text classification result vector of the video file obtained from the subtitle text classification model is:

$$\vec{V} = (v_1, v_2, \ldots v_n);$$

where, $\vec{V}$ represents the subtitle text classification result vector, $0 < v_i < 1$, i=1, 2, ..., n, and $v_i$ is a score of the subtitle text classification result vector in dimension i by inputting the subtitle text into the subtitle text classification model.

The audio text classification result vector of the video file obtained from the audio text classification model is:

$$\vec{W} = (w_1, w_2, \ldots w_n)$$

where, $\vec{W}$ represents the audio text classification result vector, $0 < w_i < 1$, i=1, 2, ..., n, and $W_i$ is a score of the audio text result vector in dimension i by inputting the audio text into the audio text classification model.

The server may perform weighted fusion on the image feature data classification result vector, subtitle text classification result vector, and audio text classification result vector of the video file by using the following equation:

$$\vec{R} = \alpha \cdot \vec{U} + \beta \cdot \vec{V} + \gamma \cdot \vec{W}$$ ;

According to this equation, the feature fusion result vector is a weighted sum of the image feature data result vector, subtitle text result vector, and audio text result vector of the video file. In the equation, $\vec{R}$ represents the feature fusion result vector, $\alpha$, $\beta$, and $\gamma$ are weight parameters assigned to the image feature data result vector, subtitle text result vector, and audio text result vector.

The values of the weight parameters $\alpha$, $\beta$, and $\gamma$ are calculated according to the following equations:

$$\cos(\vec{U}, \vec{I}) = \frac{\sum_{I=1}^{n} u_I}{\sqrt{n} \cdot \sqrt{\sum_{I=1}^{n} u_i^2}}$$

This equation represents the cosine of an angle between vector $\vec{U}$ and unit vector $\vec{I}$. In the equation, $\sum_{I=1}^{n} u_I$ is a sum of all dimension scores of vector $\vec{U}$, and $\sqrt{\sum_{I=1}^{n} u_i^2}$ is a square root of a sum of squares of all dimension scores of vector $\vec{U}$, and $0 < u_i < 1$, i=1, 2, ... n.

$$\cos(\vec{V}, \vec{I}) = \frac{\sum_{I=1}^{n} v_I}{\sqrt{n} \cdot \sqrt{\sum_{I=1}^{n} v_i^2}}$$

This equation represents the cosine of an angle between vector $\vec{V}$ and a unit vector. In the equation, $\sum_{I=1}^{n} v_I$ is a sum of all dimension scores of vector $\vec{V}$, and $\sqrt{\sum_{I=1}^{n} v_i^2}$ is a square root of a sum of squares of all dimension scores of vector $\vec{V}$, and $0 < v_i < 1$, i=1, 2, ... n.

$$\cos(\vec{W}, \vec{I}) = \frac{\sum_{I=1}^{n} w_I}{\sqrt{n} \cdot \sqrt{\sum_{I=1}^{n} w_i^2}}$$

This equation represents the cosine of an angle between vector $\vec{W}$ and a unit vector. In the equation, $\sum_{I=1}^{n} w_I$ is a sum of all dimension scores of vector $\vec{W}$, and $\sqrt{\sum_{I=1}^{n} w_i^2}$ is a square root of a sum of squares of all dimension

scores of vector $\vec{W}$, and $0<w_i<1$, $i=1, 2, \dots n$.

$\vec{I}=(1,1,\dots1)$ which includes n 1s, where 1 is a unit vector.

$$\alpha = \frac{\dfrac{1}{\cos(\vec{U},\vec{I})}}{\dfrac{1}{\cos(\vec{U},\vec{I})} + \dfrac{1}{\cos(\vec{V},\vec{I})} + \dfrac{1}{\cos(\vec{W},\vec{I})}}$$

According to this equation, the value of $\alpha$ is: a reciprocal of the cosine of an angle between vector $\vec{U}$ and a unit vector divided by a sum of reciprocals of the cosines of angles between vectors $\vec{U}$, $\vec{V}$, $\vec{W}$ and the unit vector.

$$\beta = \frac{\dfrac{1}{\cos(\vec{V},\vec{I})}}{\dfrac{1}{\cos(\vec{U},\vec{I})} + \dfrac{1}{\cos(\vec{V},\vec{I})} + \dfrac{1}{\cos(\vec{W},\vec{I})}}$$

According to this equation, the value of $\beta$ is: a reciprocal of the cosine of an angle between vector $\vec{V}$ and a unit vector divided by a sum of reciprocals of the cosines of angles between vectors $\vec{U}$, $\vec{V}$ and $\vec{W}$ and the unit vector.

$$\gamma = \frac{\dfrac{1}{\cos(\vec{W},\vec{I})}}{\dfrac{1}{\cos(\vec{U},\vec{I})} + \dfrac{1}{\cos(\vec{V},\vec{I})} + \dfrac{1}{\cos(\vec{W},\vec{I})}}$$

According to this equation, the value of $\gamma$ is: a reciprocal of the cosine of an angle between vector $\vec{W}$ and a unit vector divided by a sum of reciprocals of the cosines of angles between vectors $\vec{U}$, $\vec{V}$, and $\vec{W}$ and the unit vector.

Multiple tags corresponding to the video file played on the client may be stored in the server, where each tag is used to annotate the content of a segment or image of the video file. Therefore, optionally, if the server stores multiple tags corresponding to the video file, after obtaining the feature fusion result vector $\vec{R}$ of the video file, the server may further correct the feature fusion result vector according to the tags corresponding to the video file. This is specifically as follows:

The feature fusion result vector is $\vec{R} = (r_1, r_2,\dots r_n)$, where $0<r_i<1$, $i=1, 2, \dots$ n, and $r_i$ is a value of the feature fusion result vector in dimension $i$.

The server may generate a tag score vector in advance. Specifically, the server may map the multiple tags to the classification dimensions of each classification model and count the quantity of tags corresponding to each classification dimension to obtain a vector, and normalize the vector as the tag score vector corresponding to the video file. It is assumed that the tag score vector is: $\vec{S} = (S_1, S_2,\dots S_n)$,

where, $0<S_i<1$, $i=1, 2, \dots n$, and $S_i$ is a value of the tag score vector in dimension i.

The server may correct the feature fusion result vector of the video file according to the tag score vector of the video file, which may be implemented according to the following equation:

$$\vec{T} = \lambda \cdot \vec{R} + \mu \cdot \vec{S}$$

where, $\vec{T}$ represents the corrected final classification result vector, $\vec{R}$ represents the feature fusion result vector of the

video file, $\vec{S}$ represents the tag score vector, and $\lambda$ and $\mu$ are weight parameters assigned to the feature fusion result vector and tag score vector of the video file, respectively. $\vec{T}$ is a weighted sum of the feature fusion result vector and tag score vector of the video file.

The values of the weight parameters $\lambda$ and $\mu$ are calculated according to the following equations:

$$\cos(\vec{R},\vec{I}) = \frac{\sum_{I=1}^{n} r_{I}}{\sqrt{n} \cdot \sqrt{\sum_{i}^{n} r_{i}^{2}}}$$

This equation represents the cosine of an angle between vector $\vec{R}$ and a unit vector $\vec{I}$. In the equation, $\sum_{I=1}^{n} r_{I}$ is a sum of all dimension scores of vector $\vec{R}$, and $\sqrt{\sum_{I=1}^{n} r_{i}^{2}}$ is a square root of a sum of squares of all dimension scores of vector $\vec{R}$, and $0 < r_i < 1$, $i = 1, 2, \dots n$.

$$\cos(\vec{S},\vec{I}) = \frac{\sum_{I=1}^{n} s_{I}}{\sqrt{n} \cdot \sqrt{\sum_{i}^{n} s_{i}^{2}}}$$

This equation represents the cosine of an angle between vector $\vec{S}$ and a unit vector. In the equation, $\sum_{I=1}^{n} s_{I}$ is a sum of all dimension scores of vector $\vec{S}$, and $\sqrt{\sum_{I=1}^{n} s_{i}^{2}}$ is a square root of a sum of squares of all dimension scores of vector $\vec{S}$, and $0 < S_i < 1$, $i = 1, 2, \dots n$.

$$\lambda = \frac{\dfrac{1}{\cos(\vec{R},\vec{I})}}{\dfrac{1}{\cos(\vec{R},\vec{I})} + \dfrac{1}{\cos(\vec{S},\vec{I})}}$$

According to this equation, the value of $\lambda$ is: a reciprocal of the cosine of an angle between vector $\vec{R}$ and a unit vector divided by a sum of reciprocals of the cosines of angles between vectors $\vec{R}$ and $\vec{S}$ and the unit vector.

$$\mu = \frac{\dfrac{1}{\cos(\vec{S},\vec{I})}}{\dfrac{1}{\cos(\vec{R},\vec{I})} + \dfrac{1}{\cos(\vec{S},\vec{I})}}$$

According to this equation, the value of $\mu$ is: a reciprocal of the cosine of an angle between vector $\vec{S}$ and a unit vector divided by a sum of reciprocals of the cosines of angles between vectors $\vec{R}$ and $\vec{S}$ and the unit vector.

The foregoing is only a feasible implementation of the weighted fusion algorithm in the embodiment and the present invention is not limited thereto. In fact, the present invention may use other conventional weighted fusion algorithms to determine the feature fusion result vector of a video file or an advertisement file.

S304b. The server performs weighted fusion calculation on at least one of the image feature data classification result vector, subtitle text classification result vector, and audio text classification result vector of each advertisement file to obtain a feature fusion result vector of each advertisement file.

Similarly to S304a, the server may perform weighted fusion calculation on at least one of the image feature data classification result vector, subtitle text classification result vector, and audio text classification result vector of each advertisement file. For the specific process of weighted fusion calculation, reference may be made to the description in S304a, and details are not described herein.

It should be noted that S304b may be performed before the server receives the at least one of the image feature data, subtitle text, and audio text of the video file sent by the client, or performed after the server receives the at least one of the image feature data, subtitle text, and audio text.

S305. The server performs similarity matching calculation on the feature fusion result vectors of advertisement files and the feature fusion result vector of the video file and determines one or more advertisement files of maximum similarity as a matching advertisement file.

This embodiment provides a method for similarity matching calculation as follows:

It is assumed that the feature fusion result vector of any one advertisement file is:

$$\vec{X} = (x_1, x_2, \ldots x_n)$$

where, $0 < x_i < 1$, $i = 1, 2, \ldots n$, and $x_i$ is a score of the advertisement file in dimension i.

It is assumed that the feature fusion result vector of a video file is:

$$\vec{Y} = (y_1, y_2, \ldots y_n)$$

where, $0 < y_i < 1$, $i = 1, 2, \ldots n$, and $y_i$ is a score of the video file in dimension i.

Then, the similarity between any one advertisement file and the video file may be calculated according to the following equation:

$$Sin(\vec{X}, \vec{Y}) = \frac{\sum_{i=1}^{n}(x_i \cdot y_i)}{\sqrt{\sum_{i=1}^{n}x_i^2} \cdot \sqrt{\sum_{i=1}^{n}y_i^2}}$$

This equation is used to calculate the sine of an angle between the feature fusion result vector of the advertisement file and the feature fusion result vector of the video file. In the equation, $\sum_{i=1}^{n}(x_i \cdot y_i)$ represents a sum of products of the corresponding dimension scores of the two vectors; $\sqrt{\sum_{i=1}^{n}x_i^2}$ represents a square root of a sum of squares of the dimension scores of vector $\vec{X}$; $\sqrt{\sum_{i=1}^{n}y_i^2}$ is a square root of a sum of squares of the dimension scores of vector $\vec{Y}$; $0 < x_i < 1$, where $i = 1, 2, \ldots n$, and $x_i$ is a score of the advertisement file in dimension i; and $0 < y_i < 1$, where $i = 1, 2, \ldots n$, and $y_i$ is a score of the video file in dimension i.

After the server obtains the similarity between each advertisement file to be placed and the video file, the server may select one or more advertisements of maximum similarity as the matching advertisement.

The foregoing is only a feasible implementation of the similarity matching algorithm in the embodiment and the present invention is not limited thereto. In fact, the present invention may use other conventional similarity matching algorithms to determine the advertisement file that matches the video file.

S306. The server sends the matching advertisement file to the client.

After determining the advertisement file that matches the video file, the server may send the matching advertisement file or a link of the advertisement file to the client for the client to play.

The video advertisement playing method provided in the embodiment may be applicable to a client on a terminal such as a personal computer and a mobile phone, for example, the insertion of an advertisement in a video player. It is especially suitable for selecting, when a played video is suspended, to play an advertisement that best matches the video content being played.

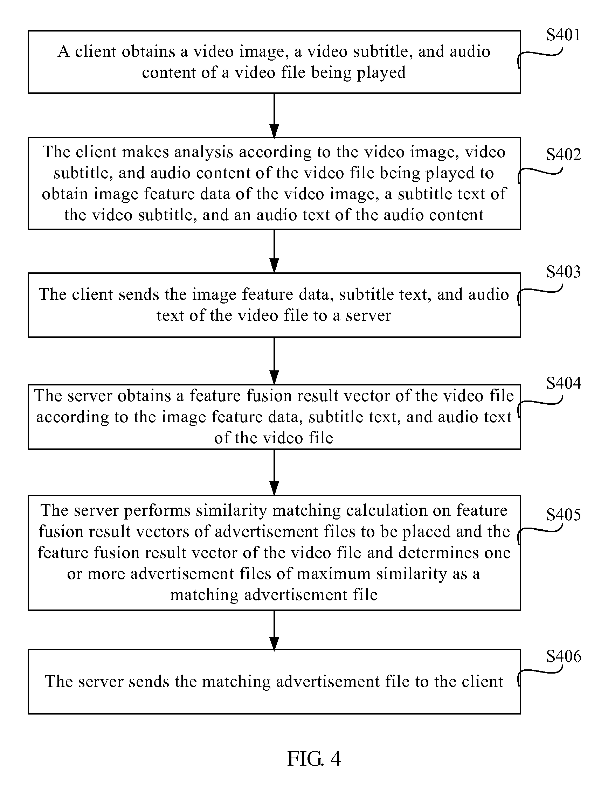

The video advertisement playing method provided by the present invention may be further described by using a specific example. It is assumed that a client needs to insert an advertisement when the playing of a video file is suspended. As shown in FIG. 4, the method includes the following:

S401. A client obtains a video image, a video subtitle, and audio content of a video file being played.

The client may use video player software to directly obtain a snapshot picture of the video being played as the video image of the video file being played.

The client may slice a video segment into frames and then process the video image to determine whether the video image includes text information and a position of the text information in the video image, and cut a text area off to form a text area. Finally, the client performs grayscale transform and binary transform on the extracted text area and obtains a subtitle text image with black characters on a white background or white characters on a black background.

The client may also use a video player to directly obtain the audio content of the video file being played, or select the audio content intercepted between the start time and the end time in the video and select a required audio part.

S402. The client makes analysis according to the video image, video subtitle, and audio content of the video file being played to obtain image feature data of the video file, a subtitle text of the video subtitle, and an audio text of the audio content.

For the process in which the client obtains the image feature data of the video file, subtitle text of the video subtitle, and audio text of the audio content, reference may be made to the related description of the embodiment illustrated in FIG. 1. The details are not described herein.

S403. The client sends the image feature data, subtitle text, and audio text of the video file to a server.

S404. The server obtains a feature fusion result vector of the video file according to the image feature data, subtitle text, and audio text of the video file.

S405. The server performs similarity matching calculation on feature fusion result vectors of advertisement files to be placed and the feature fusion result vector of the video file and determines one or more advertisement files of maximum similarity as a matching advertisement file.

Before determining the matching advertisement file, the server needs to set up an image feature data classification model, a subtitle text classification model, and an audio text classification model. For the specific modeling process, reference may be made to the embodiment illustrated in FIG. 3. In the embodiment, the server defines five classification dimensions, such as automobile, IT, real estates, food, and entertainment, for each classification model.

It is assumed that the image feature data classification result vector of the video file obtained by inputting the image feature data of the video file into the image feature data classification model is:

$$U = (0.10, 0.10, 0.05, 0.05, 0.70);$$

The subtitle text classification result vector of the video file obtained by inputting the subtitle text of the video file into the subtitle text classification model is:

$$\overrightarrow{V} = (0.05, 0.05, 0.10, 0, 0.80);$$

The audio text classification result vector of the video file obtained by inputting the audio text of the video file into the audio text classification model is:

$$\overrightarrow{W} = (0.07, 0.08, 0.10, 0, 0.75);$$

Then, the feature fusion result vector $\overrightarrow{R}$ of the video file is calculated. For the calculation process, reference may be made to the embodiment illustrated in FIG. 3, where:

$$\cos(\overrightarrow{U}, \overrightarrow{I}) = \frac{1}{\sqrt{5} \cdot \sqrt{0.515}} = 1.60$$

$$\cos(\overrightarrow{V}, \overrightarrow{I}) = \frac{1}{\sqrt{5} \cdot \sqrt{0.655}} = 1.81$$

$$\cos(\overrightarrow{W}, \overrightarrow{I}) = \frac{1}{\sqrt{5} \cdot \sqrt{0.5813}} = 1.71$$

where, $\overrightarrow{I} = (1, 1, \ldots 1)$ includes five 1s.

$$\alpha = \frac{\dfrac{1}{\cos(\overrightarrow{U}, \overrightarrow{I})}}{\dfrac{1}{\cos(\overrightarrow{U}, \overrightarrow{I})} + \dfrac{1}{\cos(\overrightarrow{V}, \overrightarrow{I})} + \dfrac{1}{\cos(\overrightarrow{W}, \overrightarrow{I})}} = \frac{0.625}{0.625 + 0.552 + 0.585} = 0.355$$

$$\beta = \frac{\dfrac{1}{\cos(\overrightarrow{V}, \overrightarrow{I})}}{\dfrac{1}{\cos(\overrightarrow{U}, \overrightarrow{I})} + \dfrac{1}{\cos(\overrightarrow{V}, \overrightarrow{I})} + \dfrac{1}{\cos(\overrightarrow{W}, \overrightarrow{I})}} = \frac{0.552}{0.625 + 0.552 + 0.585} = 0.313$$

$$\gamma = \frac{\dfrac{1}{\cos(\overrightarrow{W}, \overrightarrow{I})}}{\dfrac{1}{\cos(\overrightarrow{U}, \overrightarrow{I})} + \dfrac{1}{\cos(\overrightarrow{V}, \overrightarrow{I})} + \dfrac{1}{\cos(\overrightarrow{W}, \overrightarrow{I})}} = \frac{0.585}{0.625 + 0.552 + 0.585} = 0.332$$

$$\alpha \cdot \vec{U} = (0.0355, 0.0355, 0.0178, 0.0178, 0.2485)$$

$$\beta \cdot \vec{V} = (0.0156, 0.0156, 0.0313, 0, 0.2505)$$

$$\gamma \cdot \vec{W} = (0.0232, 0.0266, 0.0332, 0, 0.2490)$$

$$\vec{R} = \alpha \cdot \vec{U} + \beta \cdot \vec{V} + \gamma \cdot \vec{W}$$

$$= (0.0743, 0.0777, 0.0823, 0.0178, 0.7480)$$

It should be noted that, if the server does not have tags of the video file, the server may directly perform similarity matching calculation on the feature fusion result vector $\vec{R}$ of the video file obtained in the above process and the feature fusion result vectors of the advertisement files (the process of calculating the feature fusion result vectors of the advertisement files is omitted in the embodiment) and use one or more advertisements of maximum similarity as a target advertisement file that best matches the video file.

If the server stores tags of the video file, the server may map the tags to the classification dimensions of each classification model and count the quantity of tags mapped to each classification dimension to obtain a tag score vector $\vec{S}$. Then, the server uses the tag score vector $\vec{S}$ to correct the feature fusion result vector $\vec{R}$ of the video file to obtain a final feature fusion result vector $\vec{T}$ of the video file. Then, the server performs similarity matching calculation on $\vec{T}$ and the feature fusion result vectors of the advertisement files to determine an advertisement file that matches the video file.

S406. The server sends the matching advertisement file to the client.

Persons of ordinary skill in the art understand that all or a part of the processes in the methods provided in the embodiments can be implemented by hardware under the instruction of a computer program. The program may be stored in a computer readable storage medium and when the program is executed, the steps of the methods in the method embodiments are involved. The storage medium may be a magnetic disk, a CD-ROM, a read-only memory (Read-Only Memory, ROM), or a random access memory (Random Access Memory, RAM).

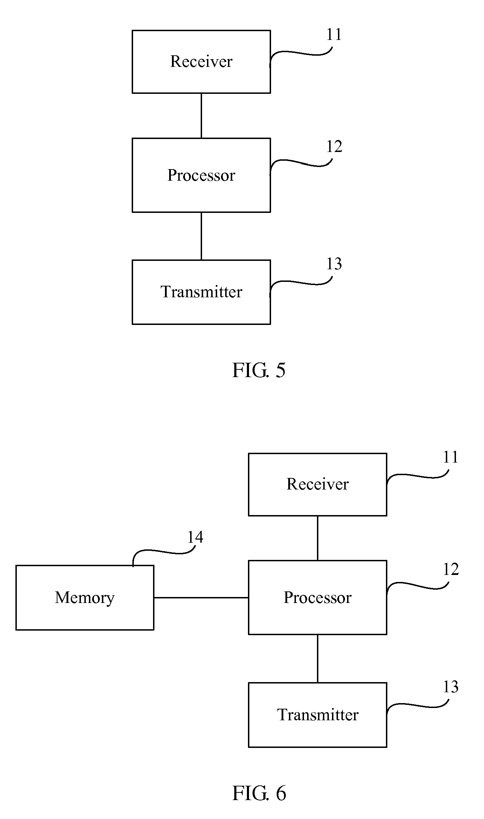

FIG. 5 is a schematic structural diagram of a server according to an embodiment of the present invention. As shown in FIG. 5, the server includes a receiver 11, a processor 12, and a transmitter 13, where:

the receiver 11 is configured to receive at least one of image feature data, a subtitle text, and an audio text of a video file sent by a client, where the image feature data, subtitle text, and audio text of the video file are obtained by the client by analysis according to a video image, a video subtitle, and audio content of the video file being played, respectively;
the processor 12 is configured to obtain a feature fusion result vector of the video file according to the at least one of the image feature data, subtitle text, and audio text of the video file, perform similarity matching calculation on feature fusion result vectors of advertisement files to be placed and the feature fusion result vector of the video file, and determine one or more advertisement files of maximum similarity as a matching advertisement file; and
the transmitter 13 is configured to send the matching advertisement file to the client.

FIG. 6 is a schematic structural diagram of a server according to another embodiment of the present invention. As shown in FIG. 6, the server includes a receiver 11, a processor 12, a transmitter 13, and a memory 14.

In the embodiment, the processor 12 may specifically be configured to: input image feature data of a video file into a preset image feature data classification model for classification to obtain an image feature data classification result vector of the video file; and/or input a subtitle text of the video file into a preset subtitle text classification model for classification to obtain a subtitle text classification result vector of the video file; and/or input an audio text of the video file into a preset audio text classification model for classification to obtain an audio text classification result vector of the video file, where the image feature data classification model, subtitle text classification model, and audio text classification model have the same classification dimensions; and perform weighted fusion calculation on at least one of the image feature data classification result vector, subtitle text classification result vector, and audio text classification result vector of the video file to obtain a feature fusion result vector of the video file.

Further, the processor 12 may be configured to extract image features of collected video images for training to obtain image feature data of the video images for training, perform text annotating on the video images for training to obtain annotation data of the video images for training, and perform support vector machine SVM training on the image feature data and annotation data of the video images for training to obtain an image feature data classification model.

Likewise, the processor may further be configured to extract subtitles of collected videos for training to obtain subtitle texts of the videos for training, perform text annotating on the videos for training to obtain annotation data of the videos for training, and perform SVM training on the subtitle texts and annotation data of the videos for training to obtain a subtitle text classification model.

Likewise, the processor 12 may further be configured to extract audios of collected audios for training to obtain audio texts of the audios for training, perform text annotating on the audios for training to obtain annotation data of the audios for training, and perform SVM training on the audio texts and annotation data of the audios for training to obtain an audio text classification model.

In a feasible implementation, the processor 12 may specifically be configured to:

perform weighted fusion calculation according to $\vec{R}=\alpha\cdot\vec{U}+\beta\cdot\vec{V}+\gamma\cdot\vec{W}$, where $\vec{R}$ is the feature fusion result vector, $\vec{I}$ is a unit vector, $\vec{U}$ is the image feature data classification result vector, $\vec{V}$ is the subtitle text classification result vector, $\vec{W}$ is the audio text classification result vector, and $\alpha$, $\beta$, and $\gamma$ are weight parameters assigned to the image feature data result vector, subtitle text result vector, and audio text result vector, where

$$\alpha = \frac{\dfrac{1}{\cos(\vec{U},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}},$$

$$\beta = \frac{\dfrac{1}{\cos(\vec{V},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}, \text{ and}$$

$$\gamma = \frac{\dfrac{1}{\cos(\vec{W},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}.$$

Further, the processor 12 may be configured to: obtain at least one of image feature data, a subtitle text, and an audio text of each advertisement file according to a video image and/or a video subtitle and/or audio content of each advertisement file to be placed; input the image feature data of each advertisement file into the image feature data classification model for classification to obtain an image feature data classification result vector of each advertisement file; and/or input the subtitle text of each advertisement file into the subtitle text classification model for classification to obtain a subtitle text classification result vector of each advertisement file; and/or input the audio text of each advertisement file into the audio text classification model for classification to obtain an audio text classification result vector of each advertisement file, where the image feature data classification result vector, subtitle text classification result vector, and audio text classification result vector of the advertisement file have the same classification dimensions; and perform weighted fusion calculation on at least one of the image feature data classification result vector, subtitle text classification result vector, and audio text classification result vector of each advertisement file to obtain a feature fusion result vector of each advertisement file.

The memory 14 may be configured to store multiple tags of the video file, where the tags are used to annotate segments or image content of the video file.

Correspondingly, the processor 12 may further be configured to map the multiple tags to the classification dimensions, and count the quantity of tags corresponding to each classification dimension to obtain a tag score vector corresponding to the video file, and correct the feature fusion result vector of the video file by using the tag score vector of the video file.

The server provided in the embodiment of the present invention corresponds to the video playing method provided in the present invention and is a functional device that implements the video playing method. For the specific process for the server to execute the video playing method, reference may be made to the method embodiments, and details are not described herein.

With the server provided in the embodiment of the present invention, the client makes analysis according to a video image being played to obtain at least one of image feature data, a subtitle text, and an audio text and send to the server; the server obtains a feature fusion result vector of the video file according to the feature data provided by the client, performs similarity matching calculation with feature fusion result vectors of advertisement files to be placed to determine a matching advertisement file, and then sends the matching advertisement to the client for playing, so that the advertisement played on the client is more adaptable to the scene being played on the client.

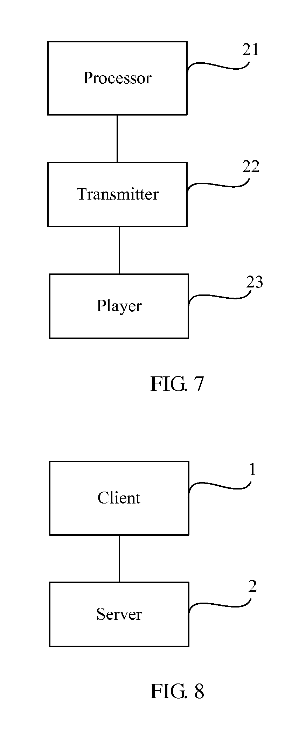

FIG. 7 is a schematic structural diagram of a client according to an embodiment of the present invention. As shown in FIG. 7, the client includes a processor 21, a transmitter 22, and a player 23, where:

the processor 21 is configured to make analysis according to a video image and/or a video subtitle and/or audio content of a video file being played to obtain at least one of image feature data of the video image, a subtitle text of the video subtitle, and an audio text of the audio content;

the transmitter 22 is configured to send the at least one of the image feature data, subtitle text, and audio text of the video file to a server, so that the server determines a matching advertisement file according to the at least one of the image feature data, subtitle text, and audio text of the video file; and

the player 23 is configured to play the matching advertisement file sent by the server.

The client provided in the embodiment of the present invention corresponds to the video playing method provided in the present invention and is a functional device that implements the video playing method. For the specific process for the client to execute the video playing method, reference may be made to the method embodiments, and details are not described herein.

The client provided in the embodiment of the present invention makes analysis according to a video image being played to obtain at least one of image feature data, a subtitle text, and an audio text and send to the server; the server obtains a feature fusion result vector of the video file according to the feature data provided by the client, performs similarity matching calculation with feature fusion result vectors of advertisement files to be placed to determine a matching advertisement file, and then, sends the matching advertisement to the client for playing, so that the advertisement played on the client is more adaptable to the scene being played on the client.

FIG. 8 is a schematic structural diagram of a video advertisement playing system according to an embodiment of the present invention. As shown in FIG. 8, the system includes a client 1 and a server 2, where:

the client 1 is configured to: making analysis according to a video image and/or a video subtitle and/or audio content of a video file being played to obtain at least one of image feature data of the video image, a subtitle text of the video subtitle, and an audio text of the audio content; send the at least one of the image feature data, subtitle text, and audio text of the video file to the server 2, so that the server 2 determines a matching advertisement file according to the at least one of the image feature data, subtitle text, and audio text of the video file; and play the matching advertisement file sent by the server 2; and

the server 2 is configured to: receive the at least one of the image feature data, subtitle text, and audio text of the video file sent by the client 1, where the image feature data, subtitle text, and audio text of the video file are obtained by the client 1 by analysis respectively according to the video image, video subtitle, and audio content of the video file being played; obtain a feature fusion result vector of the video file according to the at least one of the image feature data, subtitle text, and audio text of the video file; perform similarity matching calculation on feature fusion result vectors of advertisement files to be placed and the feature fusion result vector of the video file and determine one or more advertisement files of maximum similarity as the matching advertisement file; and send the matching advertisement file to the client 1.

The video advertisement playing system provided in the embodiment of the present invention corresponds to the video playing method provided in the present invention and is a system that implements the video playing method. For the specific process for the system to execute the video playing method, reference may be made to the method embodiments, and details are not described herein.

In the video advertisement playing system provided in the embodiment of the present invention, the client makes analysis according to a video image being played to obtain at least one of image feature data, a subtitle text, and an audio text and send to the server; the server obtains a feature fusion result vector of the video file according to the feature data provided by the client, performs similarity matching calculation with feature fusion result vectors of advertisement files to be placed to determine a matching advertisement file, and then sends the matching advertisement to the client for playing, so that the advertisement played on the client is more adaptable to the scene being played on the client.

Finally, it should be noted that the foregoing embodiment is merely intended for describing the technical solutions of the present invention other than limiting the present invention. Although the present invention is described in detail with reference to the foregoing embodiments, persons of ordinary skill in the art should understand that modifications may still be made to the technical solutions described in the foregoing embodiments, or equivalent replacements may still be made to some technical features thereof, without departing from the idea and scope of the technical solutions of the embodiments of the present invention.

**Claims**

1. A video advertisement playing method, comprising:

receiving at least one of image feature data, a subtitle text, and an audio text of a video file sent from a client, wherein the image feature data, subtitle text, and audio text of the video file are obtained by the client by analysis respectively according to a video image, a video subtitle, and audio content of the video file being played;
obtaining a feature fusion result vector of the video file according to the at least one of the image feature data, subtitle text, and audio text of the video file;
performing similarity matching calculation on feature fusion result vectors of advertisement files to be placed and the feature fusion result vector of the video file and determining one or more advertisement files with maximum similarity as a matching advertisement file; and
sending the matching advertisement file to the client.

2. The method according to claim 1, wherein obtaining a feature fusion result vector of the video file according to the at least one of the image feature data, subtitle text, and audio text of the video file comprises:

inputting the image feature data of the video file into a preset image feature data classification model for classification to obtain an image feature data classification result vector of the video file; and/or inputting the subtitle text of the video file into a preset subtitle text classification model for classification to obtain a subtitle text classification result vector of the video file; and/or inputting the audio text of the video file into a preset audio text classification model for classification to obtain an audio text classification result vector of the video file, wherein the image feature data classification model, the subtitle text classification model, and the audio text classification model have the same classification dimensions; and
performing weighted fusion calculation on at least one of the image feature data classification result vector, subtitle text classification result vector, and audio text classification result vector of the video file to obtain the feature fusion result vector of the video file.

3. The method according to claim 2, wherein, before receiving at least one of image feature data, a subtitle text, and an audio text of a video file sent by a client, the method further comprises:

extracting image features of collected video images for training to obtain image feature data of the video images for training;
performing text annotating on the video images for training to obtain annotation data of the video images for training; and
performing support vector machine SVM training on the image feature data and annotation data of the video images for training to obtain the image feature data classification model.

4. The method according to claim 2, wherein, before receiving at least one of image feature data, a subtitle text, and an audio text of a video file sent by a client, the method further comprises:

extracting audios of collected audios for training to obtain audio texts of the audios for training;
performing text annotating on the audios for training to obtain annotation data of the audios for training; and
performing SVM training on the audio texts and annotation data of the audios for training to obtain the audio text classification model.

5. The method according to claim 2, wherein, before receiving at least one of image feature data, a subtitle text, and an audio text of a video file sent by a client, the method further comprises:

extracting subtitles of collected videos for training to obtain subtitle texts of the videos for training;
performing text annotating on the videos for training to obtain annotation data of the videos for training; and

performing SVM training on the subtitle texts and annotation data of the videos for training to obtain the subtitle text classification model.

6. The method according to any one of claims 2 to 5, further comprising:

performing the weighted fusion calculation according to $\vec{R}=\alpha\cdot\vec{U}+\beta\cdot\vec{S}+\gamma\cdot\vec{W}$, wherein $\vec{R}$ is the feature fusion result vector, $\vec{I}$ is a unit vector, $\vec{U}$ is the image feature data classification result vector, $\vec{V}$ is the subtitle text classification result vector, $\vec{W}$ is the audio text classification result vector, and $\alpha$, $\beta$, and $\gamma$ are weight parameters assigned to the image feature data result vector, subtitle text result vector, and audio text result vector, wherein,

$$\alpha = \frac{\dfrac{1}{\cos(\vec{U},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}, \quad \beta = \frac{\dfrac{1}{\cos(\vec{V},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}, \quad \text{and}$$

$$\gamma = \frac{\dfrac{1}{\cos(\vec{W},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}.$$

7. The method according to any one of claims 1 to 5, wherein, before performing similarity matching calculation on feature fusion result vectors of advertisement files to be placed and the feature fusion result vector of the video file, the method further comprises:

obtaining at least one of image feature data, a subtitle text, and an audio text of each advertisement file according to at least one of a video image, a video subtitle and audio content of each advertisement file to be placed;
inputting the image feature data of each advertisement file into the image feature data classification model for classification to obtain an image feature data classification result vector of each advertisement file; and/or inputting the subtitle text of each advertisement file into the subtitle text classification model for classification to obtain a subtitle text classification result vector of each advertisement file; and/or inputting the audio text of each advertisement file into the audio text classification model for classification to obtain an audio text classification result vector of each advertisement file, wherein the image feature data classification result vector, subtitle text classification result vector, and audio text classification result vector of the advertisement file have the same classification dimensions; and
performing weighted fusion calculation on at least one of the image feature data classification result vector, subtitle text classification result vector, and audio text classification result vector of each advertisement file to obtain a feature fusion result vector of each advertisement file.

8. The method according to any one of claims 2 to 5, wherein, if a server stores multiple tags of the video file, and the tags are used to annotate segments or image content of the video file, after obtaining a feature fusion result vector of the video file, the method further comprises:

mapping the multiple tags to the classification dimensions and counting a quantity of tags corresponding to each classification dimension to obtain a tag score vector corresponding to the video file; and
correcting the feature fusion result vector of the video file by using the tag score vector of the video file.

9. A video advertisement playing method, comprising:

making analysis according to a video image and/or a video subtitle and/or audio content of a video file being played to obtain at least one of image feature data of the video image, a subtitle text of the video subtitle, and an audio text of the audio content;
sending the at least one of the image feature data, subtitle text, and audio text of the video file to a server to cause the server to determine a matching advertisement file according to the at least one of the image feature data, subtitle text, and audio text of the video file; and
playing the matching advertisement file sent from the server.

**EP 2 785 058 A1**

10. A server, comprising:

a receiver, configured to receive at least one of image feature data, a subtitle text, and an audio text of a video file sent form a client, wherein the image feature data, subtitle text, and audio text of the video file are obtained by the client by analysis respectively according to a video image, a video subtitle, and audio content of the video file being played;
a processor, configured to obtain a feature fusion result vector of the video file according to the at least one of the image feature data, subtitle text, and audio text of the video file, perform similarity matching calculation on feature fusion result vectors of advertisement files to be placed and the feature fusion result vector of the video file, and determine one or more advertisement files of maximum similarity as a matching advertisement file; and
a transmitter, configured to send the matching advertisement file to the client.

11. The server according to claim 10, wherein the processor is specifically configured to: input the image feature data of the video file into a preset image feature data classification model for classification to obtain an image feature data classification result vector of the video file; and/or input the subtitle text of the video file into a preset subtitle text classification model for classification to obtain a subtitle text classification result vector of the video file; and/or input the audio text of the video file into a preset audio text classification model for classification to obtain an audio text classification result vector of the video file, wherein the image feature data classification model, the subtitle text classification model, and the audio text classification model have the same classification dimensions; and perform weighted fusion calculation on at least one of the image feature data classification result vector, subtitle text classification result vector, and audio text classification result vector of the video file to obtain the feature fusion result vector of the video file.

12. The server according to claim 11, wherein: the processor is further configured to extract image features of collected video images for training to obtain image feature data of the video images for training, perform text annotating on the video images for training to obtain annotation data of the video images for training, and perform support vector machine SVM training on the image feature data and annotation data of the video images for training to obtain the image feature data classification model;
the processor is further configured to extract subtitles of collected videos for training to obtain subtitle texts of the videos for training, perform text annotating on the videos for training to obtain annotation data of the videos for training, and perform SVM training on the subtitle texts and annotation data of the videos for training to obtain the subtitle text classification model; and
the processor is further configured to extract audios of collected audios for training to obtain audio texts of the audios for training, perform text annotating on the audios for training to obtain annotation data of the audios for training, and perform SVM training on the audio texts and annotation data of the audios for training to obtain the audio text classification model.

13. The server according to claim 11 or 12, wherein:

the processor is specifically configured to perform the weighted fusion calculation according to $\vec{R}=\alpha\cdot\vec{U}+\beta\cdot\vec{V}+\gamma\cdot\vec{W}$, wherein $\vec{R}$ is the feature fusion result vector, $\vec{I}$ is a unit vector, $\vec{U}$ is the image feature data classification result vector, $\vec{V}$ is the subtitle text classification result vector, $\vec{W}$ is the audio text classification result vector, and $\alpha$, $\beta$, and $\gamma$ are weight parameters assigned to the image feature data result vector, subtitle text result vector, and audio text result vector, wherein,

$$\alpha = \frac{\dfrac{1}{\cos(\vec{U},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}},$$

$$\beta = \frac{\dfrac{1}{\cos(\vec{V},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}},$$

and $$\gamma = \frac{\dfrac{1}{\cos(\vec{W},\vec{I})}}{\dfrac{1}{\cos(\vec{U},\vec{I})}+\dfrac{1}{\cos(\vec{V},\vec{I})}+\dfrac{1}{\cos(\vec{W},\vec{I})}}.$$

**14.** The server according to any one of claims 10 to 12, wherein the processor is further configured to: obtain at least one of image feature data, a subtitle text, and an audio text of each advertisement file according to a video image and/or a video subtitle and/or audio content of each advertisement file to be placed; input the image feature data of each advertisement file into the image feature data classification model for classification to obtain an image feature data classification result vector of each advertisement file; and/or input the subtitle text of each advertisement file into the subtitle text classification model for classification to obtain a subtitle text classification result vector of each advertisement file; and/or input the audio text of each advertisement file into the audio text classification model for classification to obtain an audio text classification result vector of each advertisement file, wherein the image feature data classification result vector, subtitle text classification result vector, and audio text classification result vector of the advertisement file have the same classification dimensions; and perform weighted fusion calculation on at least one of the image feature data classification result vector, subtitle text classification result vector, and audio text classification result vector of each advertisement file to obtain a feature fusion result vector of each advertisement file.

**15.** The server according to any one of claims 10 to 12, further comprising:

a memory, configured to store multiple tags of the video file, wherein the tags are used to annotate segments or image content of the video file; wherein
the processor is further configured to map the multiple tags to the classification dimensions and count a quantity of tags corresponding to each classification dimension to obtain a tag score vector corresponding to the video file, and correct the feature fusion result vector of the video file by using the tag score vector of the video file.

**16.** A client, comprising:

a processor, configured to make analysis according to a video image and/or a video subtitle and/or audio content of a video file being played to obtain at least one of image feature data of the video image, a subtitle text of the video subtitle, and an audio text of the audio content;
a transmitter, configured to send the at least one of the image feature data, subtitle text, and audio text of the video file to a server, so that the server determines a matching advertisement file according to the at least one of the image feature data, subtitle text, and audio text of the video file; and
a player, configured to play the matching advertisement file sent by the server.

**17.** A video advertisement playing system, comprising the server according to any one of claims 10 to 15 and the client according to claim 16.

FIG. 1

Client

Send — Image feature data

Send — Subtitle text

Send — Audio text

S201

Feature fusion result vector of a video file — S202

Perform similarity matching calculation on feature fusion result vectors of advertisement files and the feature fusion result vector of the video file — S203

Send a matching advertisement — S204

Client

FIG. 2

Client

Server

S301a

Video images for training

Image feature data | Annotation data

SVM training

S302 | S302 | S302

Image feature data of a video file

Subtitle text of the video file

Audio text of the video file

Image feature data of an advertisement file

Subtitle text of the advertisement file

Audio text of the advertisement file

303b1 | 303b1 | 303b1

Image feature data classification model

S301b

Videos for training

Subtitle text | Annotation data

SVM training

Subtitle text classification model

S301c

Audios for training

Audio text | Annotation data

SVM training

Audio text classification model

S303a

Image feature data classification result vector of the video file

Subtitle text classification result vector of the video file

Audio text classification result vector of the video file

S303b2 | S303b2 | S303b2

Image feature data classification result vector of the advertisement file

Subtitle text classification result vector of the advertisement file

Audio text classification result vector of the advertisement file

S303a | S303a

Weighted fusion

Weighted fusion

S304a

Feature fusion result vector of the video file

Perform similarity matching

S304b

Feature fusion result vector of the advertisement file

S305

The matching advertisement

S306

Client

FIG. 3

| A client obtains a video image, a video subtitle, and audio content of a video file being played | S401 |

| The client makes analysis according to the video image, video subtitle, and audio content of the video file being played to obtain image feature data of the video image, a subtitle text of the video subtitle, and an audio text of the audio content | S402 |

| The client sends the image feature data, subtitle text, and audio text of the video file to a server | S403 |

| The server obtains a feature fusion result vector of the video file according to the image feature data, subtitle text, and audio text of the video file | S404 |

| The server performs similarity matching calculation on feature fusion result vectors of advertisement files to be placed and the feature fusion result vector of the video file and determines one or more advertisement files of maximum similarity as a matching advertisement file | S405 |

| The server sends the matching advertisement file to the client | S406 |

FIG. 4

Receiver — 11

Processor — 12

Transmitter — 13

FIG. 5

Memory — 14

Receiver — 11

Processor — 12

Transmitter — 13

FIG. 6

Processor    21

Transmitter    22

Player    23

FIG. 7

Client    1

Server    2

FIG. 8

# INTERNATIONAL SEARCH REPORT

| International application No. |
| --- |
| PCT/CN2011/082747 |

## A.   CLASSIFICATION OF SUBJECT MATTER

H04N 7/52 (2001.01) i

According to International Patent Classification (IPC) or to both national classification and IPC

## B.    FIELDS SEARCHED

Minimum documentation searched (classification system followed by classification symbols)

IPC: H04N; G06F

Documentation searched other than minimum documentation to the extent that such documents are included in the fields searched

Electronic data base consulted during the international search (name of data base and, where practicable, search terms used)

CNABS; CNTXT; CNKI; VEN: AD, advertisement, media, video, audio, caption, subtitle, add, insert, match, character

## C.   DOCUMENTS CONSIDERED TO BE RELEVANT

| Category* | Citation of document, with indication, where appropriate, of the relevant passages | Relevant to claim No. |
| --- | --- | --- |
| X | CN1582444A (NOKIA CORP.) 16 Feb. 2005 (16.02.2005) the claim 1, the description, page 5, line 10 - page 6, line 1 | 9, 16 |
| X | CN101072340A (MENG, Zhiping) 14 Nov. 2007 (14.11.2007) the claims 1-14 | 9, 16 |
| A | CN101179739A (TENCENT TECHNOLOGY SHENZHEN CO., LTD.) 14 May 2008 (14.05.2008) the whole document | 1-17 |
| A | CN101046871A (ZTE CORP.) 03 Oct. 2007 (03.10.2007) the whole document | 1-17 |

☐ Further documents are listed in the continuation of Box C.     ☒  See patent family annex.

| * Special categories of cited documents: | "T" later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
| --- | --- |
| 01 Aug. 2012 (01.08.2012) | 23 Aug. 2012 (23.08.2012) |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10)62019450 | Authorized officer<br><br>MA, Hui<br><br>Telephone No. (86-10)62411524 |
| --- | --- |

Form PCT/ISA/210 (second sheet) (July 2009)

## INTERNATIONAL SEARCH REPORT
### Information on patent family members

| | International application No. |
|---|---|
| | PCT/CN2011/082747 |

| Patent Documents referred in the Report | Publication Date | Patent Family | Publication Date |
|---|---|---|---|
| CN1582444A | 16.02.2005 | WO0150296A3 | 07.08.2003 |
| | | AU1877801A | 16.07.2001 |
| | | EP1356387A2 | 29.10.2003 |
| | | CN100390823C | 28.05.2008 |
| | | WO0150296A2 | 12.07.2001 |
| CN101072340A | 14.11.2007 | WO2009000204A1 | 31.12.2008 |
| CN101179739A | 14.05.2008 | TW200912784A | 16.03.2009 |
| CN101046871A | 03.10.2007 | NONE | |

Form PCT/ISA /210 (patent family annex) (July 2009)